Europäisches Patentamt

(19) European Patent Office (11) Publication number: **0 257 682**
**B1**
Office européen des brevets

(12) **EUROPEAN PATENT SPECIFICATION**

(45) Date of publication of the patent specification: (51) Int. Cl.⁵: **F16F 9/43**, F15B 1/04
**27.12.90**

(21) Application number: **87201459.2**

(22) Date of filing: **31.07.87**

(54) Valve and charging assembly to charge the spherical reservoirs of motor car suspensions with gas under pressure.

| | |
|---|---|
| (30) Priority: **28.08.86 IT 8257086** | (73) Proprietor: **TECNOSIR Snc di LAZZARI CARLO & MELLA MARIA, Via Priuli 15, I-31030 Castello di Godego (TV)(IT)** |
| (43) Date of publication of application: **02.03.88 Bulletin 88/9** | (72) Inventor: **Mella, Maria, Via Priuli 15, I-31030 Castello di Godego (TV)(IT)** |
| (45) Publication of the grant of the patent: **27.12.90 Bulletin 90/52** | (74) Representative: **Petraz, Gilberto Luigi, G.L.P. S.a.S. di Gilberto Petraz P.le Cavedalis 6/2, I-33100 Udine(IT)** |
| (84) Designated Contracting States: **AT BE CH DE ES FR GB GR IT LI** | |
| 56 References cited: **EP-A- 0 171 126** **CH-A- 655 553** **DE-A- 2 447 343** **DE-U- 8 601 331** **GB-A- 2 183 312** | |

## Description

This invention concerns a filling valve and associated charging assembly which enable gas to be charged and pressure to be restored in high pressure reservoirs employed advantageously in motor car suspensions.

In the field of motor cars small reservoirs are used for the hydropneumatic suspensions and as a reserve for the same and consist of a special metallic sphere within which a rubber diaphragm of a special shape is inserted; a gas under pressure, normally nitrogen, is contained within the diaphragm.

Hydraulic oil enters on the side of the diaphragm opposite to that where the gas is introduced, and compresses the diaphragm and therefore the gas; this causes a to-and-fro flow linked to variations in the pressure of the oil.

A reservoir of the above type is employed as a reserve of pressure in power-assisted circuits and in the hydropneumatic suspensions of motor cars.

However well such reservoirs may be made, the pressure of the gas in them falls after a given time and becomes eventually wholly non-existent, thus entailing the ineffectiveness of the reserve of pressure or a rigidity of the suspension.

In the present state of the art the restoring of normal conditions leads to replacement of the reservoir and a considerable expense.

An attempt has been made to fit a closure screw which by being removed momentarily enables gaseous fluid under pressure to be introduced.

To simplify introduction of the gaseous fluid, arrangements have been made to fit a small valve or microvalve which cooperates with an attachment connected directly to the source of fluid under pressure consisting, for instance, of a cylinder of compressed gas.

This new proposal does not meet requirements since the charging system is not only faulty and inaccurate but is also dangerous.

Patent CH 655 553 discloses the use of a valve with two male attachments and a sealing ball located outside the reservoir.

If the valve is broken, the ball cannot work any longer and the reservoir loses its charge.

In the event of impacts or other accidents the outer male threaded portion will be damaged.

Moreover, the charging assembly comprises fixed means to actuate the ball, and these means will not enable a safe hydraulic seal to be obtained during screwing and unscrewing of the charging assembly onto the valve.

GB patent application 2 183 312 comprises a valve firmly secured to the reservoir and therefore hard to replace.

Moreover, the needle of the charging assembly is actuated by the charging pressure and entails problems of control of the seal engagement and of measurement of pressure in the reservoir.

Besides, the connection between the valve and the charging assembly includes two screw assemblies, which are complicated and provide an uncertain efficiency owing to difficulty in the coaxial positioning and tolerance between the threaded portions.

Moreover, the valve protrudes considerably and entails problems of overall bulk and of danger in the event of impacts, collisions and accidents in general.

The present applicant has designed, tested and embodied the present invention to overcome such shortcomings.

According to the invention the microvalve provided and the coupling thereof can be fitted to any reservoirs in use and can enable them to be charged with gas and the pressure of the gas to be restored easily, swiftly and without any danger for the person undertaking the specific operation.

According to the invention the application of the invention to reservoirs and its employment are operations which can be readily performed by any worker without any need of special care or equipment.

According to the invention a valve with a sealing ball comprises a female attachment for connection to a charging assembly.

The charging assembly comprises a connecting sleeve, a receiving and distribution sleeve and a needle to actuate the ball of the valve.

The invention is therefore characterized by the contents of the main claim and of the dependent claims.

The constructional features and resulting advantages will be made evident in the following description by making use of a preferred but not restrictive executive form shown in the attached figures, in which:-

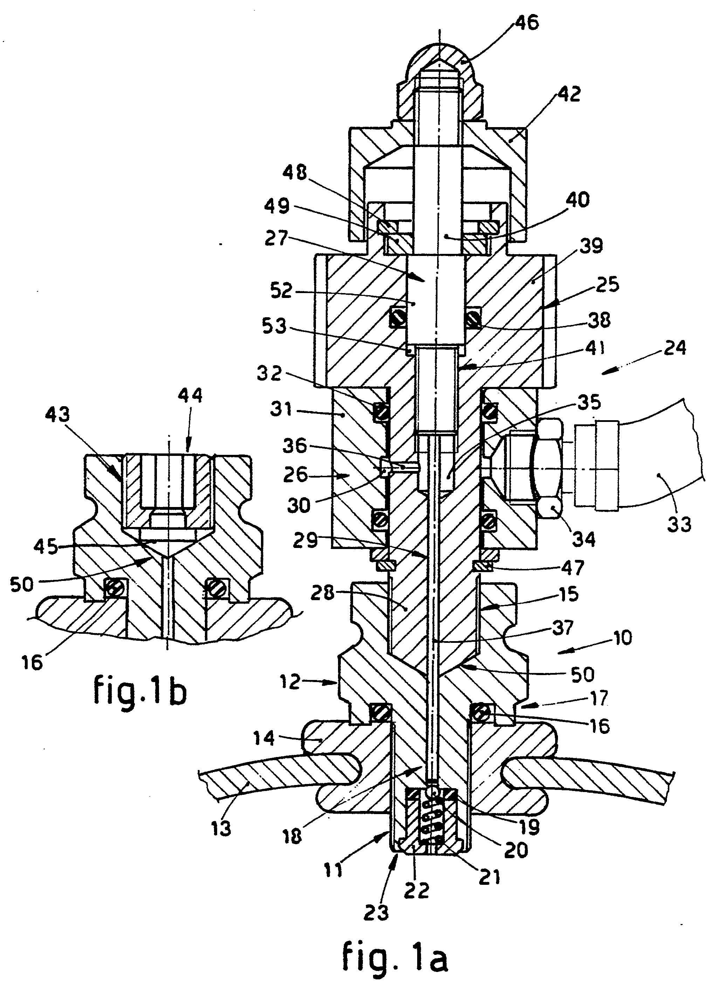

Fig.1 shows a lengthwise section of an embodiment of the invention;

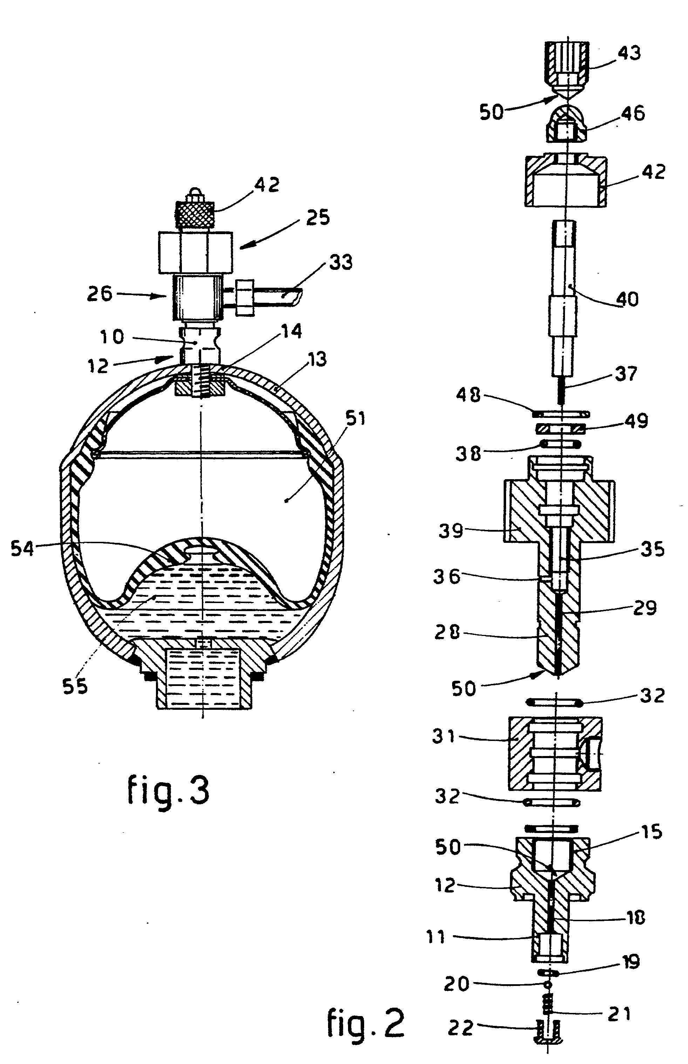

Fig.2 shows a knock-down lengthwise section of the embodiment of Fig.1;

Fig.3 shows an application for oleopneumatic suspensions.

A valve 10 is made of metal and comprises a threaded body 11, an area 12 for application of a key and an internally threaded chamber 15.

The threaded body 11 is suitable for connection to threaded attachments 14 of reservoirs 13 in use in motor vehicles.

Seal engagement is obtained with a packing 16 cooperating with a clamping ring 17 of the valve 10.

Where vehicle suspensions are involved, they comprise a chamber 51 for gas and a chamber 55 for oil, the two chambers being separated by a diaphragm 54.

The valve 10, which comprises an axial bore 18, includes in its threaded body 11 a seating in which a ball 20 and a perforated plug 22 are lodged.

A small packing 19 and a spring 21 can be inserted in that seating and cooperate with the ball 20, which serves to prevent the outflow of gas held in the reservoir 13.

The ball 20 is thrust into its seal-engagement position either by the pressure of the gas or by the spring 21, which in its turn is kept in position by a perforated plug 22, which can either be screwed into position or cooperate with a clamping rivet 23.

When the reservoir 13 has been charged, a closure stopper 43 cooperates with the threaded chamber 15 and in this example comprises a seal-engagement protrusion 45 with a tapered end 50 and an engagement socket 44 to accommodate an actuation wrench.

The tapered end 50 located between the threaded chamber 15 and axial bore 18 improves and facilitates a pneumatic seal.

When gas is to be charged or the pressure in the reservoir 13 is to be restored, the closure stopper 43 is removed and a charging assembly 24 is fitted.

The charging assembly 24 comprises mainly a connecting sleeve 25, a receiving and distribution sleeve 26 and an actuation needle 27.

The connecting sleeve 25 comprises a terminal, externally threaded body 28 having a tapered end 50 which cooperates with the tapered end of the internally threaded chamber 15.

The upper part of the threaded body 28 cooperates with the receiving and distribution sleeve 26, which is rotatably held by a clamping ring 47 of which the pneumatic seal is ensured by packings 32.

The body 31 of the distribution sleeve 26 comprises a feed channel 30 which receives gas under pressure from a socket 34 connected to the delivery source through a connecting pipe 33.

The feed channel 30 is connected to an axial bore 29 of the connecting sleeve 25 by one or more connecting holes 36 and a receiver chamber 35.

The actuation needle 27, of which the axial seal is ensured by a packing 38, is positioned coaxially with the connecting sleeve 25 and slides in a controlled manner within the axial bore 29 in the perforated body 39 of the connecting sleeve 25.

The actuation needle 27 comprises a guide and adjustment rod 40 and a terminal pin 37, both of which are integrally fixed to the needle 27; the rod 40 has a threaded body 41 suitable to cooperate with a threaded portion of the receiver chamber 35.

The actuation needle 27 cooperates at its upper end with an adjustment knob 42 and possible nut 46, while the axial seal engagement is provided by the packing 38 which cooperates with the body 52 of the needle sliding in a chamber 53 of the connecting sleeve 25.

Axial movement of the needle 27 is governed by the travel of the body 52 in the chamber 53, this travel being controlled by the threaded body 41 of the rod 40. The chamber 53 is delimited at its upper end by a ring 49 secured by an upper clamping ring 48.

When the knob 42 is rotated, the actuation needle 27 is set in rotation and thrusts with the pin 37, or retreats from, the ball 20, thus opening or closing the valve 10.

The pin 37 has a smaller diameter than the axial bore 29 of the sleeve and the axial bore 18 of the valve, and thus the fluid under pressure can pass gently without any danger of hammer blows or excessive pressure.

The body 31 of the distribution sleeve 26 may comprise a pressure gauge, and a shut-off tap may be provided upstream of the socket 34 of the distribution sleeve 26.

It is best to describe, as an example, the simple operations to charge an empty reservoir 13 which would otherwise be scrapped.

After the existing stopper has been removed, the valve 10 is fixed in position. The charging assembly 24 complete with connecting pipe 33 is then screwed to the valve 10.

The adjustment knob 42 is then rotated clockwise.

The quantity of fluid needed to reach the desired pressure is introduced and the adjustment knob 42 is then rotated anticlockwise; the pressure in the connecting pipes is discharged. In this way the ball 20 in the valve 10 prevents outflow of the gas held in the reservoir.

The charging assembly 24 is then removed and the closure stopper 43 is screwed into position.

When these operations have been completed, the reservoir 13 can be used normally.

The pressure can be checked and topped up where necessary at periodical intervals without even having to remove the reservoir 13 from its seating.

**Claims**

1. Filling valve and associated charging assembly for charging pressure reservoirs, for use inparticular in motor car suspensions, the valve (10) comprising an externally threaded portion capable of being screwed into an internally threaded attachment (14) of the reservoir (13) and a ball (20) capable of a resiliently opposed axial movement and cooperating with an axial bore (18) having an O-ring seal, the axial bore (18) being suitable for the passage of a needle (27) that constitutes part of a charging assembly (24), characterized in that:
   – the ball (20) is arranged within the threaded portion of the valve such that in use it is located within the reservoir (13),
   – the valve (10) comprises in its upper portion an internally threaded coaxial chamber (15) having a tapered bottom (50),
   – the actuation needle (27) can be actuated axially in a controlled and independent manner by an external adjustment knob (42),
   – and the charging assembly (24) includes an externally threaded body (28) with a tapered end (50) that cooperates with the internally threaded chamber (15) in providing a reciprocal anchorage and seal.

2. Valve and charging assembly as claimed in Claim 1, in which the travel of the actuation needle (27) is governed by the different axial lengths of the needle body (52) and of a chamber (53) which lodges the needle body (52).

3. Valve and charging assembly as claimed in Claim 1 or 2, which cooperates with an externally threaded closure stopper (43) having one tapered end (50) and having an engagement socket (44) at its other end.

## Patentansprüche

1. Füllventil und damit verbundene Fülleinheit zum Füllen von Druckbehältern, die insbesondere bei den Fahrzeugaufhängungen angewandt werden, wobei das Füllventil (10) einen außen geschnittenen Teil, der zum Schrauben in einem innen geschnittenen Schraubverschluß (14) des Behälters (13) geeignet ist, und eine Kugel (20), die zu einer axialen, entgegengesetzten kerbfähigen Bewegung geeignet ist und mit einem axialen, mit einer toroidförmigen Ringdichtung versehenen Loch (18) zusammenwirkt, aufweist, wobei das axiale Loch (18) zum Durchgang einer der Fülleinheit (24) angehörigen Nadel (27) geeignet ist, dadurch gekennzeichnet,

- daß die Kugel (20) im geschnittenen Teil des Ventils angeordnet ist, so daß sie sich in Betrieb im Behälter (13) befindet,
- daß das Füllventil (10) in seinem oberen Teil eine koaxiale, innen geschnittene, mit einer kegelförmigen Verjüngung (50) versehene Kammer (15) aufweist
- daß die Antriebsnadel (27) durch einen äusseren Verstellgriff (42) unter Aufsicht und unabhängig axial betätigt werden kann, und
- daß die Fülleinheit (24) einen außen geschnittenen Körper (28) mit einer kegelförmigen Verjüngung (50) aufweist, wobei der obengenannte außen geschnittene Körper mit der innen geschnittenen Kammer (15) zu einer gegenseitigen Verankerung und zu einer gegenseitigen Dichtigkeit zusammenwirkt.

2. Füllventil und Fülleinheit nach Anspruch 1, dadurch gekennzeichnet, daß der Hub der Antriebsnadel (27) von der verschiedenen Achsenlänge des Nadelkörpers (52) und von einer Kammer (53), die den obengenannten Nadelkörper (52) enthält, bestimmt wird.

3. Füllventil und Fülleinheit nach Anspruch 1 oder 2, dadurch gekennzeichnet, daß diese Füllventil und Fülleinheit mit einem außen geschnittenen Schraubenverschluß (43) mitwirken, wobei dieser Schraubverschluß eine kegelförmige Endverjüngung (50) und einen Eingriffpunkt (44) an seinem anderen Ende aufweist.

## Revendications

1. Soupape et ensemble de remplissage associé pour remplir des réservoirs de pression, utilisable particulièrement dans des suspensions de véhicules automobiles, la soupape (10) comprenant une partie filetée extérieurement pouvant être vissée dans une fixation filetée intérieurement (14) du réservoir (13) et une bille (20) pouvant effectuer un mouvement axial opposé et élastique, cette bille coopérant avec un alésage axial (18) pourvu d'un joint torique d'étanchéité, l'alésage axial (18) permettant le passage d'une aiguille (27) qui constitue une partie d'un ensemble de remplissage (24), caractérisés en ce que:

- la bille (20) est placée dans la partie filetée de la soupape de sorte qu'en utilisation elle est située à l'intérieur du réservoir (13),
- la soupape (10) comprend dans sa partie supérieure une chambre coaxiale filetée intérieurement (15) pourvue d'un fond conique (50),
- l'aiguille d'actionnement (27) peut être actionnée axialement de manière contrôlée et indépendante par un bouton extérieur de réglage (42),
- et l'ensemble de remplissage (24) comporte un corps fileté extérieurement (28) avec une extrémité conique (50) coopérant avec la chambre filetée intérieurement (15) pour former ancrage et joint.

2. Soupape et ensemble de remplissage selon la revendication 1, caractérisés en ce que le déplacement de l'aiguille d'actionnement (27) est commandé par les différentes longueurs axiales du corps d'aiguille (52) et d'une chambre (53) recevant le corps d'aiguille (52).

3. Soupape et ensemble de remplissage selon les revendications, ou 2, caractérisées en ce qu'ils coopèrent avec un bouchon de fermeture fileté extérieurement (43) pourvu d'une extrémité conique (50) et d'une douille d'engagement (44) à son autre extrémité.

EP 0 257 682 B1

fig.1b

fig. 1a

fig.3

fig.2